# EUROPEAN PATENT APPLICATION

(11) **EP 2 085 358 A1**
(43) Date of publication of application: **05.08.2009**
(21) Application number: 07828606.9
(22) Date of filing: 27.09.2007
(51) Int. Cl.: C01B 33/04, B01J 31/02, B01J 31/40, B01J 38/00

(54) **PROCESS FOR CONTINUOUSLY PRODUCING MONOSILANE**

(30) Priority: 27.09.2006 JP 2006261716
(71) Applicant: Denki Kagaku Kogyo Kabushiki Kaisha, Tokyo 103-8338 (JP)
(72) Inventor: OTSU, Toshiaki, Itoigawa-shi Niigata 949-0393 (JP); TACHIYAMA, Takashi, Itoigawa-shi Niigata 949-0393 (JP); KOBAYASHI, Mineto, Itoigawa-shi Niigata 949-0393 (JP); YUBUNE, Kazuyuki, Itoigawa-shi Niigata 949-0393 (JP); TAKEUCHI, Takao, Itoigawa-shi Niigata 949-0393 (JP); WAKUDA, Yusuke, Itoigawa-shi Niigata 949-0393 (JP)
(74) Representative: Hartz, Nikolai
(86) International application number: PCT/JP2007/068860
(87) International publication number: WO 2008/047553

(57) **Abstract**

Provided is a process for readily and efficiently producing monosilane which is industrially significantly useful.

The process uses a monosilane production apparatus comprising a reaction column, a plurality of upper condensers each of which has a reflux feed pipe serially connected to a top portion of the reaction column, a bottom reboiler of the reaction column, and an evaporation tank connected to a bottom portion of the reaction column; and
the process comprises supplying at least one of trichlorosilane and dichlorosilane to a middle stage of the reaction column, supplying at least one of a tertiary aliphatic hydrocarbon-substituted amine and a tertiary aliphatic hydrocarbon-substituted amine hydrochloride as a catalyst to an upper stage of the reaction column, introducing a resultant mixture containing monosilane, monochlorosilane, dichlorosilane, and trichlorosilane from the top portion of the reaction column to the plurality of upper condensers, separating monosilane from condensates containing monochlorosilane, dichlorosilane, and trichlorosilane at a temperature of from 50 to -50°C in the upper condensers, recycling the condensates after separating monosilane, through the reflux feed pipes to the upper stage of the reaction column, bringing the condensates into contact with the catalyst in the reaction column, withdrawing a bottom recovery liquid containing tetrachlorosilane and the catalyst from the bottom portion of the reaction column, introducing the bottom recovery liquid into the evaporation tank, and recycling the catalyst recovered from the bottom portion of the evaporation tank, to the reaction column.

## Description

### TECHNICAL FIELD

The present invention relates to a process for continuously producing monosilane, the demand for which is recently increasing as a raw material for epitaxy of silicon with a high purity and for amorphous silicon for solar cells.

### BACKGROUND ART

A known process for producing monosilane is a process for producing monosilane gas by disproportionating a hydrogenated silicon chloride such as trichlorosilane in the presence of a tertiary amine hydrochloride as a catalyst (Patent Document 1 and Patent Document 2).

Furthermore, another known process is a process for producing monosilane gas by packing a solid catalyst in a reaction column and disproportionating dichlorosilane therein (Patent Document 3). However, since the conversion reaction to monosilane is an equilibrium reaction, the equilibrated conversion ratio has not necessarily been high heretofore, from 10 to 18%, and a large-size apparatus has been required to achieve a desired production amount.
Patent Document 1: JP-B-64-3804
Patent Document 2: JP-B-63-33422
Patent Document 3: Japanese Patent 2,648,615

### DISCLOSURE OF THE INVENTION

### OBJECT TO BE ACCOMPLISHED BY THE INVENTION

The inventors of the present invention provide a process for continuously producing monosilane readily and efficiently with a large production amount of monosilane from trichlorosilane and dichlorosilane as raw materials (production amount per hour in use of an apparatus with the same reaction performance).

### MEANS TO ACCOMPLISH THE OBJECT

The present invention resides in the following aspects.
1. A process for continuously producing monosilane by means of a monosilane production apparatus comprising a reaction column, a plurality of upper condensers each of which has a reflux feed pipe serially connected to a top portion of the reaction column, a bottom reboiler of the reaction column, and an evaporation tank connected to a bottom portion of the reaction column;
   the process comprising supplying at least one of trichlorosilane and dichlorosilane to a middle stage of the reaction column, supplying at least one of a tertiary aliphatic hydrocarbon-substituted amine and a tertiary aliphatic hydrocarbon-substituted amine hydrochloride as a catalyst to an upper stage of the reaction column, introducing a resultant mixture containing monosilane, monochlorosilane, dichlorosilane, and trichlorosilane from the top portion of the reaction column to the plurality of upper condensers, separating monosilane from condensates containing monochlorosilane, dichlorosilane, and trichlorosilane at a temperature of from 50 to -50°C in the upper condensers, recycling the condensates after separating monosilane, through the reflux feed pipes to the upper stage of the reaction column, bringing the condensates into contact with the catalyst in the reaction column, withdrawing a bottom recovery liquid containing tetrachlorosilane and the catalyst from the bottom portion of the reaction column, introducing the bottom recovery liquid into the evaporation tank, and recycling the catalyst recovered from the bottom portion of the evaporation tank, to the reaction column.
2. The process for producing monosilane according to the above aspect 1, wherein the number of the upper condensers is from 2 to 5, and wherein Tᵢ-Tᵢ₊₁≧10°C where Tᵢ is a temperature of the condensate in the ith upper condenser from the reaction column (i is an integer of at least 1) and Tᵢ₊₁ is a temperature of the condensate in the (i+1)th upper condenser from the reaction column.
3. The process for producing monosilane according to the above aspect 2, wherein the number of the upper condensers is 3 or 4, and Tᵢ-Tᵢ₊₁≧15°C.
4. The process for producing monosilane according to any one of the above aspects 1 to 3, wherein a temperature of the bottom reboiler of the reaction column is from 100 to 150°C.
5. The process for producing monosilane according to any one of the above aspects 1 to 4, wherein trichlorosilane and dichlorosilane are supplied to the middle stage of the reaction column, and wherein dichlorosilane is supplied in an amount of from 2 to 100 mol% to a total amount of trichlorosilane and dichlorosilane supplied.
6. The process for producing monosilane according to any one of the above aspects 1 to 4, wherein trichlorosilane and dichlorosilane are supplied to the middle stage of the reaction column, and wherein dichlorosilane is supplied in an amount of from 5 to 50 mol% to a total amount of trichlorosilane and dichlorosilane supplied.
7. The process for producing monosilane according to any one of the above aspects 1 to 6, wherein the bottom recovery liquid contains tetrachlorosilane in an amount of from 50 to 100 mol% (excluding the catalyst).
8. The process for producing monosilane according to any one of the above aspects 1 to 7, wherein the tertiary aliphatic hydrocarbon-substituted amine and the tertiary aliphatic hydrocarbon-substituted amine hydrochloride are represented by the following formulae (1) and (2), respectively:

   R₁R₂R₃N (1) ;

   R₁R₂R₃NH⁺Cl⁻ (2),

   where each of R₁, R₂ and R₃ is an aliphatic hydrocarbon group, the carbon number of each of R₁, R₂ and R₃ is at least 2, and R₁, R₂ and R₃ are the same or different.

### EFFECT OF THE INVENTION

According to the present invention, monosilane which is industrially significantly useful is continuously produced readily and efficiently.

### BRIEF DESCRIPTION OF DRAWINGS

Fig. 1 is a schematic diagram showing an example of an apparatus used in Examples 1 to 5 and Comparative Examples 3 and 4 in the present invention.
Fig. 2 is a schematic diagram showing an example of an apparatus used in Comparative Examples 1 and 2 in the present invention.

### MEANINGS OF SYMBOLS

1: reaction column
2: bottom reboiler
3: upper condenser
4: raw material feed pipe
5: upper condenser
6: upper condenser
7: adjusting valve
8: reflux feed pipe
9: reflux feed pipe
10: reflux feed pipe
11, 28: pump
12, 29: evaporation tank
13, 20: lower condenser
14, 21, 26: collecting tank
15, 22: supply pipe

### BEST MODE FOR CARRYING OUT THE INVENTION

A raw material to be used is at least one of trichlorosilane and dichlorosilane. An amount of dichlorosilane is preferably from 2 to 100 mol% and more preferably from 5 to 50 mol% to a total amount of trichlorosilane and dichlorosilane. If the amount is less than 2 mol%, productivity of monosilane might not be improved. The amount of dichlorosilane is more preferably in a range of not more than 50 mol% from the economical viewpoint.

A catalyst to be used is at least one of a tertiary aliphatic hydrocarbon-substituted amine and a tertiary aliphatic hydrocarbon-substituted amine hydrochloride. Compounds represented by formulae (1) and (2) below are suitably used for the tertiary aliphatic hydrocarbon-substituted amine and the tertiary aliphatic hydrocarbon-substituted amine hydrochloride, respectively.

R₁R₂R₃N (1)

R₁R₂R₃NH⁺Cl⁻ (2)

In the formulae (1) and (2), each of R₁, R₂ and R₃ is an aliphatic hydrocarbon group, the carbon number of each of R₁, R₂ and R₃ is at least 2, and R₁, R₂ and R₃ may be the same or different.

The tertiary aliphatic hydrocarbon-substituted amine may be, for example, tri-n-octylamine, tri-n-butylamine, and so on. In the above formulae (1) and (2), the carbon number of each of the aliphatic hydrocarbon groups is preferably at least 2 and more preferably from 6 to 15. If the carbon numbers of the aliphatic hydrocarbon groups are less than 2, the catalyst might be likely to become solid in contact with trichlorosilane. When the catalyst becomes solid, it might cause choking in a tray, packing and so on of the reaction column, so as to result in failure in smooth and continuous operation.

In the present invention, the above-mentioned catalyst is applied and brought into contact with trichlorosilane/dichlorosilane, thereby forming dichlorosilane, monochlorosilane and monosilane in accordance with the following disproportionation formulae (1), (2) and (3).

2SiHCl₃⇔SiCl₄+SiH₂Cl₂ (1)

2SiH₂Cl₂⇔SiHCl₃+SiH₃Cl (2)

2SiH₃Cl⇔SiH₂Cl₂+SiH₄ (3)

Since the above formulae (1), (2) and (3) are equilibrium reactions, it is impossible to produce monosilane as the final product at a rate of 100% even though a reaction time is set long using trichlorosilane/dichlorosilane as a starting material; finally, monosilane, monochlorosilane, dichlorosilane, trichlorosilane and tetrachlorosilane are present in a mixed state in resultant products.

Monosilane is efficiently obtained by separating monosilane from the resultant mixture and recycling a remaining condensate to the reaction column. Furthermore, it is preferable to return the condensate to an upper stage of the reaction column (a region higher than about two thirds of the reaction column in height from the bottom) so as to come into contact with the catalyst, because the conversion rate is improved. If the condensate is returned to a middle stage of the reaction column (a region of about one third to two thirds of the reaction column in height from the bottom), the disproportionation reactions do not proceed sufficiently and an improvement in the yield of monosilane is low.

A rate of the tertiary aliphatic hydrocarbon-substituted amine and the hydrochloride thereof is preferably from 100 to 0 mol% tertiary aliphatic hydrocarbon-substituted amine and from 0 to 100 mol% tertiary aliphatic hydrocarbon-substituted amine hydrochloride. Among others, it is preferable to use from 98 to 50 mol%, particularly preferably from 98 to 60 mol% tertiary aliphatic hydrocarbon-substituted amine and from 2 to 50 mol%, particularly preferably from 2 to 40 mol% tertiary aliphatic hydrocarbon-substituted amine hydrochloride.

If the rate of the latter is less than 2 mol%, the catalytic activity is low; if the rate exceeds 40 mol%, hydrochloric acid is released during the reactions, whereby reactions below proceed and monosilane is not efficiently produced.

SiH₄+HCl→SiH₃Cl+H₂ (4)

SiH₃Cl+HCl→SiH₂Cl₂+H₂ (5)

SiH₂Cl₂+HCl→SiHCl₃+H₂ (6)

SiHCl₃+HCl→SiCl₄+H₂ (7)

The reaction column is one of a distillation column type, and the reaction column suitably used may be a plate column partitioned by sieve trays, bubble cap trays or the like, or a packed column filled with a packing material such as Raschig ring or pall ring. Since the production of monosilane is a liquid phase reaction through the disproportionation reactions, the reaction column is preferably one having a large liquid hold-up capacity.

Since separation of the reaction products by distillation is carried out simultaneously with the reactions in the reaction column, a temperature of the top portion is low and a temperature of the bottom portion is high. The reaction temperature is not constant, either because of a temperature distribution in the reaction column, but the reactions are conducted, for example, in a range of from 10 to 150°C, preferably from 30 to 120°C. If the reaction temperature is lower than 10°C, the reaction temperature could be too low for the disproportionation reactions to substantially proceed. On the other hand, if the temperature exceeds 150°C, thermal decomposition of the catalyst is likely to take place, which is undesirable. Since the reactions are preferably conducted in a boiling state, the gauge pressure is preferably at a level of from 100 to 2000 kPaG in order to keep the reaction temperature in the above-mentioned range.

The temperature of the bottom portion is controlled by the bottom reboiler, and tetrachlorosilane which need not be returned to the reaction column is preferably selectively recovered from the bottom portion. Therefore, the temperature of the bottom reboiler is preferably from 100 to 150°C, more preferably from 90 to 120°C. By setting the temperature of the bottom reboiler from 100 to 150°C, the above-mentioned bottom recovery liquid comes to contain tetrachlorosilane in an amount of from 50 to 100 mol% (excluding the catalyst), which is preferable. The bottom recovery liquid more preferably contains tetrachlorosilane in an amount of from 60 to 100 mol% (excluding the catalyst).

The mixture formed by the reactions contains chlorosilanes of monochlorosilane, dichlorosilane and trichlorosilane, and monosilane. In the present invention, monosilane is separated and taken out from the mixture and the chlorosilanes are recycled to the reaction column. The separation of monosilane from the mixture is conducted through condensation of the mixture by a condenser, and the condensation is carried out in a range of a condensate temperature of from 50 to -50°C. According to the present invention, this condensation is carried out in multiple separate stages.

If the condensate temperature in the condenser exceeds 50°C, separation of monosilane from the chlorosilanes such as dichlorosilane and monochlorosilane is inadequate and an amount of the condensate recycled to the reaction column is small, so as to result in decrease in reaction rate. On the other hand, if the temperature is lower than -50°C, the condensate containing monosilane is recycled to the reaction column, so that the reaction represented by the formula (4) above proceeds to decrease the reaction rate. Among others, the condensate temperature is preferably from 40 to -50°C and particularly preferably from 40 to -45°C.

According to the present invention, the condensates at the temperature of from 50 to -50°C are refluxed to the reaction column by means of upper condensers each of which has a reflux feed pipe serially connected to a top portion of the reaction column. The number of upper condensers with the reflux feed pipe is at least 2. In the present invention, a production amount (production amount per hour based on mole) of monosilane as the desired product depends on the number of condensers but use of too many condensers, for example, also decreases the production amount of monosilane. Based on the study by the inventors of the present invention, the number of condensers is preferably from 2 to 5 and more preferably from 3 to 4 taking the economical efficiency into consideration. A temperature difference between the condensates of upper condensers adjacent to each other is appropriately determined in accordance with the number of upper condensers with the reflux feed pipe.

In the present invention, where a temperature of the condensate of the (i+1)th upper condenser from the top portion of the reaction column (i is an integer of at least 1) is Tᵢ and a temperature of the condensate of the (i+1)th upper condenser is Tᵢ₊₁, and when the number of upper condensers is from 2 to 5, the temperature difference is determined preferably in a range of Tᵢ-Tᵢ₊₁ ≧10°C and more preferably in a range of from 15 to 100°C, depending on the specific number of upper condensers. Furthermore, when the number of upper condensers is 3 or 4, the temperature difference is determined preferably in a range of Tᵢ-Tᵢ₊₁≧15°C and more preferably in a range of from 20 to 60°C, depending on the specific number of upper condensers. If the temperature difference between the upper condensers is too small, a separation efficiency or yield of monosilane from the mixture containing monosilane, monochlorosilane, dichlorosilane and trichlorosilane might be decreased, or a recovery efficiency of monochlorosilane, dichlorosilane and trichlorosilane might be decreased.

Monochlorosilane, dichlorosilane and trichlorosilane separated and recovered are preferably recycled to the upper stage of the reaction column so as to be brought into contact with the catalyst. If the condensates are recycled to the middle stage of the reaction column, the disproportionation reactions do not proceed sufficiently and the yield of monosilane is not improved.

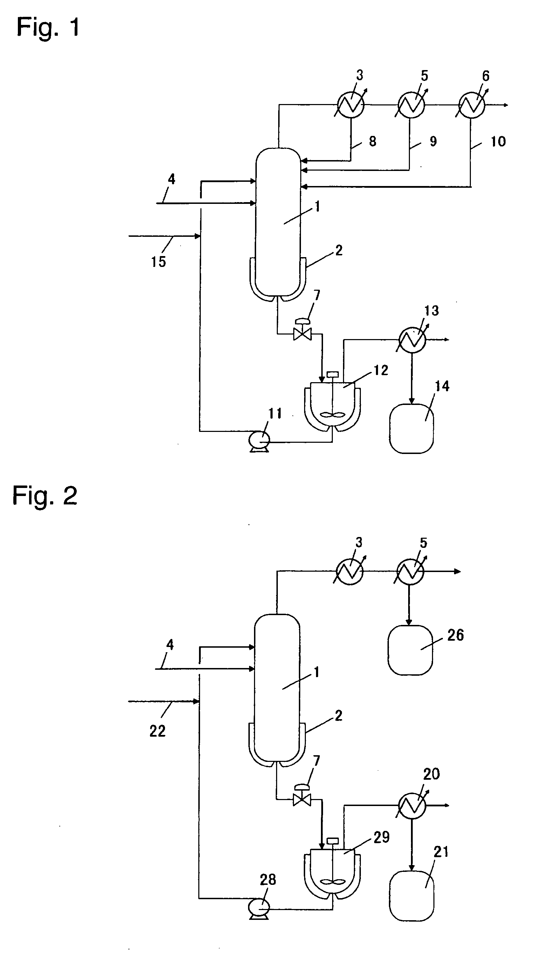

Fig. 1 is a schematic diagram showing an example of an apparatus to be used in the Examples of the present invention.

A mixture of trichlorosilane and dichlorosilane is supplied through a raw material feed pipe 4 to a middle stage of a reaction column 1 (a region of about one third to two thirds of the reaction column). The reaction column 1 is a distillation column made of stainless steel and each tray is a sieve tray. Above the reaction column 1 (in a region above an upper tray), there are an upper condenser 3, upper condenser 5 and upper condenser 6 of stainless steel serially provided, each of which can be cooled by supplying cooling water, an aqueous solution of calcium chloride or liquid nitrogen, respectively, to a jacket. In the lower portion of the reaction column 1, there is provided a bottom reboiler 2 having a built-in heater with a maximum output power of 1 KW.

The disproportionation reactions and the separation by distillation proceed simultaneously in the reaction column 1 and a gas rich in low-boiling-point components such as monosilane produced in the disproportionation reactions moves upward. The resultant mixture discharged from the top portion of the reaction column is sequentially supplied to the upper condenser 3, upper condenser 5 and upper condenser 6 to be sequentially cooled. The accompanying high-boiling-point components are condensed and condensates are recycled as refluxes through respective reflux feed pipes 8, 9 and 10 to the upper stage of the reaction column (an upper region of about one third of the reaction column). Monosilane is a majority of the low-boiling-point components obtained through the upper condenser 6.

High-boiling-point components such as tetrachlorosilane move to the bottom portion of the reaction column (a region lower than the lowest tray) and are withdrawn together with the catalyst from the bottom reboiler 2 to an evaporation tank 12 while the liquid level thereof is controlled. The evaporation tank 12 is a vessel of stainless steel with an internal capacity of 3 liters equipped with an agitator, and it is provided with a jacket. A heating medium oil under heat is circulated in the jacket to heat the evaporation tank 12. The evaporation tank 12 is operated at a temperature which is higher than the boiling point of tetrachlorosilane formed by the disproportionation reactions and lower than the boiling point of the catalyst; tetrachlorosilane and others are evaporated, collected in a lower condenser 13 cooled with methanol dry ice, and recovered into a collecting tank 14. The catalyst remaining in the evaporation tank 12 is withdrawn by a pump 11 and recycled to the upper stage of the reaction column 1. In this case, if the concentration of the tertiary aliphatic hydrocarbon-substituted amine hydrochloride in the catalyst is less than a predetermined concentration, hydrogen chloride is supplied through a supply pipe 15 as occasion may demand.

Fig. 2 is a schematic diagram showing an example of an apparatus to be used in the Comparative Examples of the present invention.

A mixture of trichlorosilane and dichlorosilane is supplied through a raw material feed pipe 4 to a middle stage of a reaction column 1. The reaction column 1 is a distillation column made of stainless steel and each tray is a sieve tray. Above the reaction column 1, there is provided upper condenser 3 of stainless steel, which can be cooled by supplying methanol dry ice to a jacket. In the lower portion of the reaction column 1, there is provided a bottom reboiler 2 having a built-in heater with a maximum output power of 1 KW.

The disproportionation reactions and the separation by distillation proceed simultaneously in the reaction column 1 and a gas rich in low-boiling-point components such as monosilane produced in the disproportionation reactions moves upward and is cooled by the upper condenser 3 to condensate the accompanying high-boiling-point components. Then the remaining gas is further condensed in a condenser 5 of stainless steel cooled with liquid nitrogen to recover a liquid condensate into a collecting tank 26.

High-boiling-point components such as tetrachlorosilane move to the bottom portion of the reaction column and are withdrawn together with the catalyst from the bottom reboiler 2 to an evaporation tank 29 while the liquid level thereof is controlled. The evaporation tank 29 is a vessel of stainless steel with an internal capacity of 3 liters equipped with an agitator, and it is provided with a jacket. A heating medium oil under heat is circulated in the jacket to heat the evaporation tank 29. The evaporation tank 29 is operated at a temperature which is higher than the boiling point of tetrachlorosilane formed by the disproportionation reactions and lower than the boiling point of the catalyst; tetrachlorosilane and others are evaporated, collected in a lower condenser 20 cooled with methanol dry ice, and recovered into a collecting tank 21. The catalyst remaining in the evaporation tank 29 is withdrawn by a pump 28 and recycled to the upper stage of the reaction column 1. In this case, if the concentration of the tertiary aliphatic hydrocarbon-substituted amine hydrochloride in the catalyst is less than a predetermined concentration, hydrogen chloride is supplied through a supply pipe 22 as occasion may demand.

### EXAMPLES

Now, the present invention will be explained with reference to examples, but it should be understood that the present invention is by no means restricted to such specific examples.

### EXAMPLES 1 to 5

The experiment was carried out using the apparatus of the flow shown in Fig. 1. The reaction column 1 is a stainless-steel distillation column with a column diameter of 100 mm, a column height of 600 mm, and five trays each of which is a sieve tray. The evaporation tank 12 was filled with 3.6 moles of tri-n-octylamine, 0.6 mole of hydrogen chloride gas was blown into the evaporation tank 12 to prepare a catalyst containing 14 mol% tri-n-octylamine hydrochloride, and the tank was maintained at 100°C by heating the heating medium oil in the jacket.

The upper condenser 3 connected to the top portion of the reaction column was cooled with cooling water at 15°C, the upper condenser 5 with calcium chloride at -15°C, and the upper condenser 6 with liquid nitrogen, whereby temperatures of the condensates were adjusted at 35°C for the condensate 8, at -13°C for the condensate 9 and at -45°C for the condensate 10 in Fig. 1. The bottom reboiler 2 of the reaction column was heated by an electric heater, and a mixture of trichlorosilane and dichlorosilane was continuously supplied at a flow rate of 16 mol/hr through the raw material feed pipe 4 into the third tray from the bottom of the reaction column 1. It is noted that the amount of dichlorosilane in the mixture was one of the molar ratios to the total amount of trichlorosilane and dichlorosilane as shown in Table 1. At the same time, the pump 11 to circulate the catalyst was operated to circulate the catalyst in the evaporation tank 12 at flow rates of 3.6 mol/hr for tri-n-octylamine and 0.6 mol/hr for the hydrogen chloride gas to the fourth tray from the bottom of the reaction column 1.

An internal pressure of the reaction column 1 was maintained at a gauge pressure of 260 kPaG by controlling an adjusting valve. Furthermore, the liquid level of the bottom reboiler 2 was maintained at a constant level by controlling the adjusting valve 7, and a reaction solution containing the catalyst in the bottom reboiler 2 was withdrawn to the evaporation tank 12. The recovered catalyst was continuously recycled to the fourth tray from the bottom of the reaction column while appropriately supplying the hydrogen chloride gas to the recovered catalyst through the supply pipe 15.

The operation was continuously carried out for 20 hours while maintaining the temperature of the bottom reboiler 2 of the reaction column at 130°C, whereby a low-boiling-point gas was obtained from the top portion of the column. The gas obtained through the upper condenser 6 was analyzed by gas chromatography, and it was found that monosilane was obtained in one of the production amounts as shown in Table 1. A content of tetrachlorosilane in a condensate in the collecting tank 14 was analyzed by gas chromatography and it was found to be 55 mol%.

**TABLE 1**

| | Example 1 | Example 2 | Example 3 | Example 4 | Example 5 |
|---|---|---|---|---|---|
| Trichlorosilane /dichlorosilane | 100/0 | 95/5 | 80/20 | 50/50 | 0/100 |
| Production amount (mol/hr) | 1.7 | 1.8 | 2.0 | 2.4 | 3.1 |

### COMPARATIVE EXAMPLES

### COMPARATIVE EXAMPLES 1 and 2

The experiment was carried out using the apparatus shown in Fig. 2. The reaction column 1 is a stainless-steel distillation column with a column diameter of 100 mm, a column height of 600 mm, and five trays each of which is a sieve tray. The evaporation tank 29 was filled with 3.6 moles of tri-n-octylamine, 0.6 mole of hydrogen chloride gas was blown into the evaporation tank 29 to prepare a catalyst containing 14 mol% tri-n-octylamine hydrochloride, and the tank was maintained at 100°C by heating the heating medium oil in the jacket.

On the other hand, the upper condenser 3 connected to the top portion of the reaction column was cooled with methanol dry ice at -60°C; then the bottom reboiler 2 of the reaction column was heated by an electric heater; and a raw material mixture of trichlorosilane and dichlorosilane was continuously supplied at a flow rate of 16 mol/hr through the raw material feed pipe 4 to the third tray from the bottom of the reaction column 1. It is noted that the amount of dichlorosilane in the mixture was one of the molar ratios to the total amount of trichlorosilane and dichlorosilane as shown in Table 2. At the same time, the pump 28 to circulate the catalyst was operated to circulate the catalyst in the evaporation tank 29 at flow rates of 3.6 mol/hr for tri-n-octylamine and 0.6 mol/hr for the hydrogen chloride gas to the fourth tray from the bottom of the reaction column 1.

An internal pressure of the reaction column 1 was maintained at a gauge pressure of 260 kPaG by controlling an adjusting valve. Furthermore, the liquid level of the bottom reboiler 2 was maintained at a constant level by controlling the adjusting valve 7, and a reaction solution containing the catalyst in the bottom reboiler was withdrawn to the evaporation tank 29. The recovered catalyst was continuously recycled to the fourth tray from the bottom of the reaction column while appropriately supplying the hydrogen chloride gas to the recovered catalyst through the supply pipe 22.

The operation was continuously carried out for 20 hours while maintaining the temperature of the bottom reboiler 2 of the reaction column at 130°C, whereby a low-boiling-point gas was obtained from the top portion of the column. The collected liquid in the collecting tank 26 was analyzed by gas chromatography, and it was found that monosilane was obtained in one of the production amounts as shown in Table 2.

**TABLE 2**

| | Comparative Example 1 | Comparative Example 2 |
|---|---|---|
| Trichlorosilane/dichlorosilane | 80/20 | 50/50 |
| Production amount (mol/hr) | 1.7 | 2.1 |

### EXAMPLES 6 to 7

The operation was conducted in the same manner as in Examples 1 to 5 except that the temperature of the condensates was adjusted to one of the temperatures as shown in Table 3 and that the amount of dichlorosilane in the mixture supplied was changed to 20 mol% to the total amount of trichlorosilane and dichlorosilane. Monosilane was obtained in one of the production amounts as shown in Table 3 from a collected liquid.

**TABLE 3**

| | Example 6 | Example 7 |
|---|---|---|
| Location | condensates 8, 9, 10 | condensates 8, 9, 10 |
| Production amount (mol/hr) | 0.8 | 1.1 |
| Temperature | 45°C | -50°C |

### INDUSTRIAL APPLICABILITY

The production process of the present invention is useful because it allows industrially useful monosilane to be continuously produced readily and efficiently by using at least one of trichlorosilane and dichlorosilane as a raw material.

The entire disclosure of Japanese Patent Application No. 2006-261716 filed on Sep. 27, 2006 including the specification, claims, drawings and summary is incorporated herein by reference in its entirety.

## Claims

1. A process for continuously producing monosilane by means of a monosilane production apparatus comprising a reaction column, a plurality of upper condensers each of which has a reflux feed pipe serially connected to a top portion of the reaction column, a bottom reboiler of the reaction column, and an evaporation tank connected to a bottom portion of the reaction column;
the process comprising supplying at least one of trichlorosilane and dichlorosilane to a middle stage of the reaction column, supplying at least one of a tertiary aliphatic hydrocarbon-substituted amine and a tertiary aliphatic hydrocarbon-substituted amine hydrochloride as a catalyst to an upper stage of the reaction column, introducing a resultant mixture containing monosilane, monochlorosilane, dichlorosilane, and trichlorosilane from the upper stage of the reaction column to the plurality of upper condensers, separating monosilane from condensates containing monochlorosilane, dichlorosilane, and trichlorosilane at a temperature of from 50 to -50°C in the upper condensers, recycling the condensates after separating monosilane, through the reflux feed pipes to the upper stage of the reaction column, bringing the condensates into contact with the catalyst in the reaction column, withdrawing a bottom recovery liquid containing tetrachlorosilane and the catalyst from the bottom portion of the reaction column, introducing the bottom recovery liquid into the evaporation tank, and recycling the catalyst recovered from the bottom portion of the evaporation tank, to the reaction column.

2. The process for producing monosilane according to Claim 1, wherein the number of the upper condensers is from 2 to 5, and wherein Tᵢ-Tᵢ₊₁≧10°C where Tᵢ₊₁ is a temperature of the condensate in the (i+1)th upper condenser from the top portion (i is an integer of at least 1) .

3. The process for producing monosilane according to Claim 2, wherein the number of the upper condensers is 3 or 4, and Tᵢ-Tᵢ₊₁≧15°C.

4. The process for producing monosilane according to any one of Claims 1 to 3, wherein a temperature of the bottom reboiler of the reaction column is from 100 to 150°C.

5. The process for producing monosilane according to any one of Claims 1 to 4, wherein trichlorosilane and dichlorosilane are supplied to the middle stage of the reaction column, and wherein dichlorosilane is supplied in an amount of from 2 to 100 mol% to a total amount of trichlorosilane and dichlorosilane supplied.

6. The process for producing monosilane according to any one of Claims 1 to 4, wherein trichlorosilane and dichlorosilane are supplied to the middle stage of the reaction column, and wherein dichlorosilane is supplied in an amount of from 5 to 50 mol% to a total amount of trichlorosilane and dichlorosilane supplied.

7. The process for producing monosilane according to any one of Claims 1 to 6, wherein the bottom recovery liquid contains tetrachlorosilane in an amount of from 50 to 100 mol% (excluding the catalyst).

8. The process for producing monosilane according to any one of Claims 1 to 7, wherein the tertiary aliphatic hydrocarbon-substituted amine and the tertiary aliphatic hydrocarbon-substituted amine hydrochloride are represented by the following formulae (1) and (2), respectively:
R₁R₂R₃N (1):
R₁R₂R₃NH⁺Cl⁻ (2),
where each of R₁, R₂ and R₃ is an aliphatic hydrocarbon group, the carbon number of each of R₁, R₂ and R₃ is at least 2, and R₁, R₂ and R₃ are the same or different.
